# EUROPEAN PATENT APPLICATION

(11) **EP 3 513 765 A1**
(43) Date of publication of application: **24.07.2019**
(21) Application number: 19152978.3
(22) Date of filing: 22.01.2019
(51) Int. Cl.: A61C 13/00

(54) **WORKPIECE CLAMPING DEVICE**

(30) Priority: 23.01.2018 JP 2018008751
(71) Applicant: DGSHAPE Corporation, Hamamatsu-shi, Shizuoka 431-2103 (JP)
(72) Inventor: SUYAMA, Akihiro, Hamamatsu-shi, Shizuoka 4312103 (JP)
(74) Representative: Grünecker Patent- und Rechtsanwälte PartG mbB

(57) **Abstract**

A workpiece clamping device (30) includes a support unit (40) configured to be able to support a first workpiece (50) and a second workpiece (60), and a clamping plate (32) configured to be placed over the first workpiece (50) or the second workpiece (60) supported by the support unit (40) such that the clamping plate (32) and the support unit (40), in combination, clamp the workpiece (50, 60) placed on the support unit (40). The support unit (40) is configured to support a second large-diameter portion (61), which is the largest outer diameter portion of the second workpiece (60), on an upper face of the support unit (40). The support unit has protruding portions (40b) extending toward a center of an opening (40a) of the support unit (40) from certain portions of the opening (40a) such that a first large-diameter portion (51), which is the largest outer diameter portion of the first workpiece (50), can be placed on the protruding portions (40b).

## Description

### FIELD OF THE INVENTION

The present invention relates to a workpiece clamping device attached to or mounted in a milling machine and configured to hold a workpiece to be machined (processed) to a prosthesis.

### BACKGROUND OF THE INVENTION

A milling machine is known as a machine to grind a workpiece to a prosthesis such as an artificial tooth (dental prosthesis). One of conventional technologies relevant to the milling machines is disclosed in Japanese Patent Application Laid-Open Publication No. 2017-189340.

The milling machine, such as the one disclosed in Japanese Patent Application Laid-Open Publication No. 2017-189340, has a workpiece clamping device to hold a workpiece which will be processed to the prosthesis. The workpiece clamping device is disposed such that it can rotate. The milling machine processes the workpiece to a desired shape with a tool such as a drill, while causing the workpiece to rotate.

### SUMMARY OF THE INVENTION

The prosthesis obtained by the processing of the milling machine may be artificial teeth, a combination of the artificial teeth and a dental plate (denture base), or the like. Different kinds of workpiece are used depending upon the kinds of the prosthesis to be obtained. When the prosthesis to be obtained is a combination of the artificial teeth and the dental plate (the dental plate is integrated with the artificial teeth), the workpiece should have a larger size than when the prosthesis to be obtained is artificial teeth alone. It is desirable if a single clamping device can hold different sizes of workpieces.

One object of the present invention is to provide a workpiece clamping device that can hold workpieces having different sizes.

According to one aspect of the present invention, there is provided a workpiece clamping device configured to be able to support a first workpiece and a second workpiece, the first workpiece having a first large-diameter portion that is generally shaped like a disc, the first large-diameter portion defining a largest outer diameter portion of the first workpiece, the first workpiece being ground to a first prosthesis, the second workpiece having a second large-diameter portion whose outer diameter is greater than the first large-diameter portion, the second large-diameter portion defining a largest outer diameter portion of the second workpiece, the second workpiece being ground to a second prosthesis, which is different from the first prosthesis, the workpiece clamping device including: a support unit configured to support the second large-diameter portion on an upper face of the support unit, the support unit having an opening through which the first workpiece and the second workpiece can move, the support unit also having protruding portions extending toward a center of the opening of the support unit from certain portions of the opening of the support unit such that the first large-diameter portion can be placed on the protruding portions; and a clamping plate configured to be placed over the first or second workpiece supported by the support unit such that the clamping plate and the support unit, in combination, clamp the first or second workpiece placed on the support unit.

The support unit can support (hold) the second large-diameter portion on the upper face of the support unit, and support the first large-diameter portion on the protruding portions of the support unit, which extend toward the center of the opening of the support unit. Thus, the two kinds of workpieces, having different sizes, can be placed on the upper face and the protruding portions of the support unit, respectively. It is not necessary to prepare different support units and clamping plates depending upon the kinds of the workpieces. Rather, the single workpiece clamping device can hold the different sizes of workpieces.

### BRIEF DESCRIPTION OF THE DRAWINGS

Fig. 1 is a perspective view of a milling machine, in which a workpiece clamping device according to an embodiment of the present invention is mounted.
Fig. 2 is a perspective view of the workpiece clamping device shown in Fig. 1 when a first workpiece is held by the workpiece clamping device.
Fig. 3 is an exploded perspective view that shows the first workpiece and the workpiece clamping device shown in Fig. 2.
Fig. 4 is a cross-sectional view taken along the line 4-4 in Fig. 2.
Fig. 5 is an enlarged view of the part 5 in Fig. 4.
Fig. 6 is an exploded perspective view of a support unit shown in Fig. 2.
Fig. 7 is a perspective view of a second workpiece.
Fig. 8 is an exploded perspective view that shows the workpiece clamping device, a spacer, and the second workpiece.
Fig. 9 is a cross-sectional view of the workpiece clamping device, the spacer, and the second workpiece shown in Fig. 8.

### DETAILED DESCRIPTION OF THE PREFERRED EMBODIMENTS

Embodiments of the present invention will be described below with reference to the accompanying drawings. In the drawings, Fr indicates front, Rr indicates rear, Le indicates left, Ri indicates right, Up indicates up, Dn indicates down, and Ce indicates the center of a workpiece clamping device.

### Embodiments

### The Structure of the Milling Machine 10

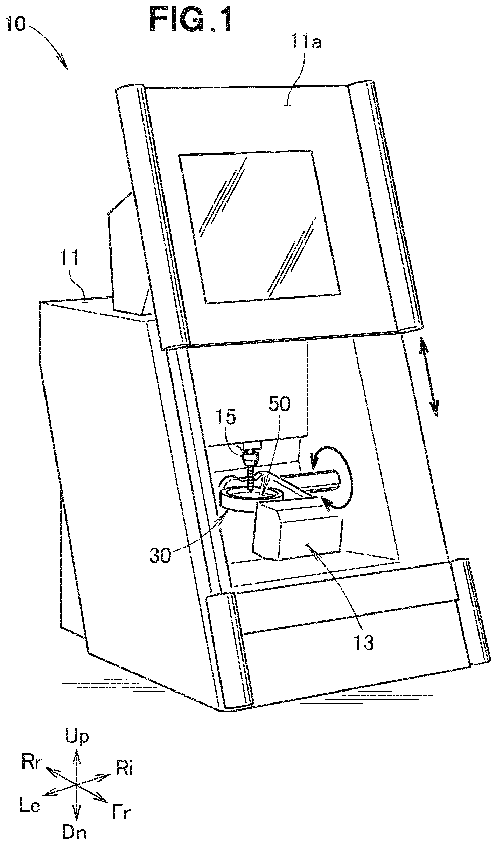

Referring to Fig. 1, a milling machine 10 is used to obtain a dental prosthesis by machining or processing. The milling machine 10 includes a rotating device 13 configured to rotatably support a first workpiece 50, a workpiece clamping device 30 fixed to the rotating device 13 and configured to hold the first workpiece 50, and a drill 15 that faces the first workpiece 50 and configured to grind the first workpiece 50. The rotating device 13, the workpiece clamping device 30 and the drill 15 are disposed in a milling machine main body 11, which serves as a housing of the milling machine.

### The Milling Machine Main Body 11

The milling machine main body 11 has a milling machine lid 11a mounted thereon such that the milling machine lid 11a can slide up and down. When the first workpiece 50 is ground by the drill 15, the milling machine lid 11a is lowered to prevent shavings (cuttings) from flying to the outside.

### The Rotating Device 13

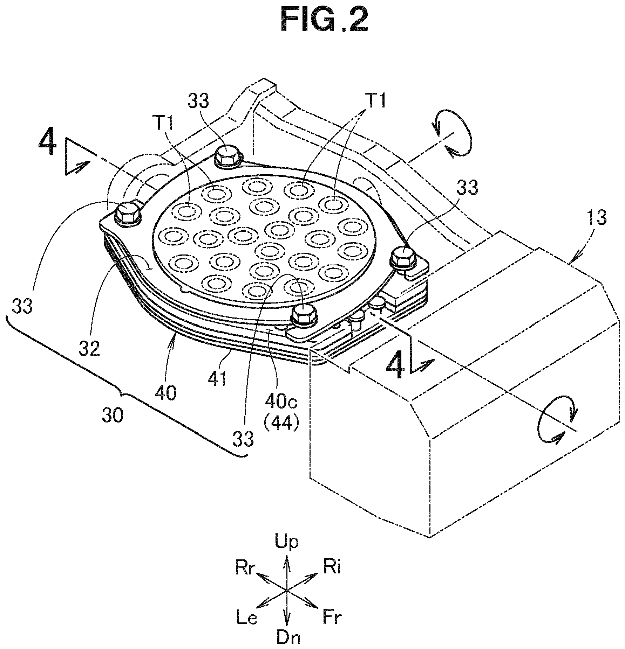

Referring also to Fig. 2, the rotating device 13 is mounted in the milling machine main body 11 such that the rotating device 13 can rotate, and the rotating device 13 supports the workpiece clamping device 30 such that the workpiece clamping device 30 can rotate.

### The Workpiece Clamping Device 30

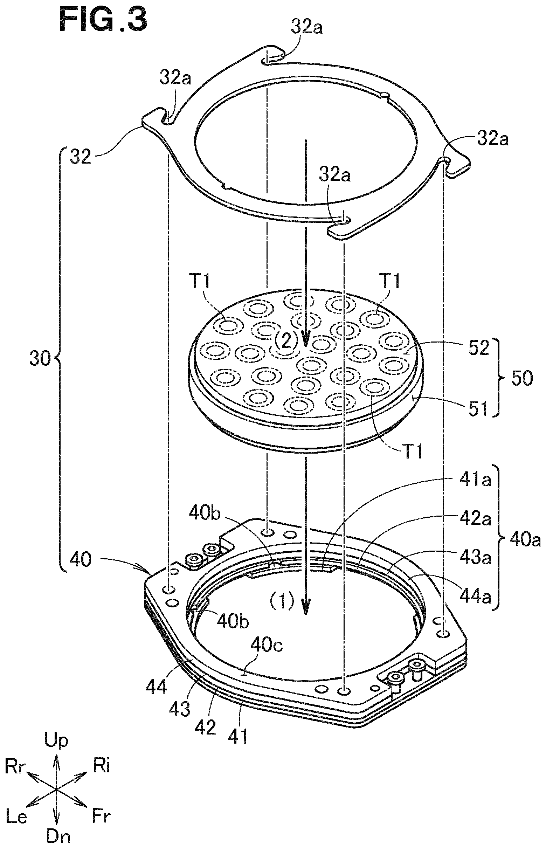

Referring to Fig. 3 to Fig. 5, the workpiece clamping device 30 includes a support unit 40 on which the first workpiece 50 is placed, a planar clamping plate 32 configured to sandwich the first workpiece 50 between the support unit 40 and the claim plate 32, and tightening members 33 configured to tighten the support unit 40 and the clamping plate 32.

### The Support Unit 40

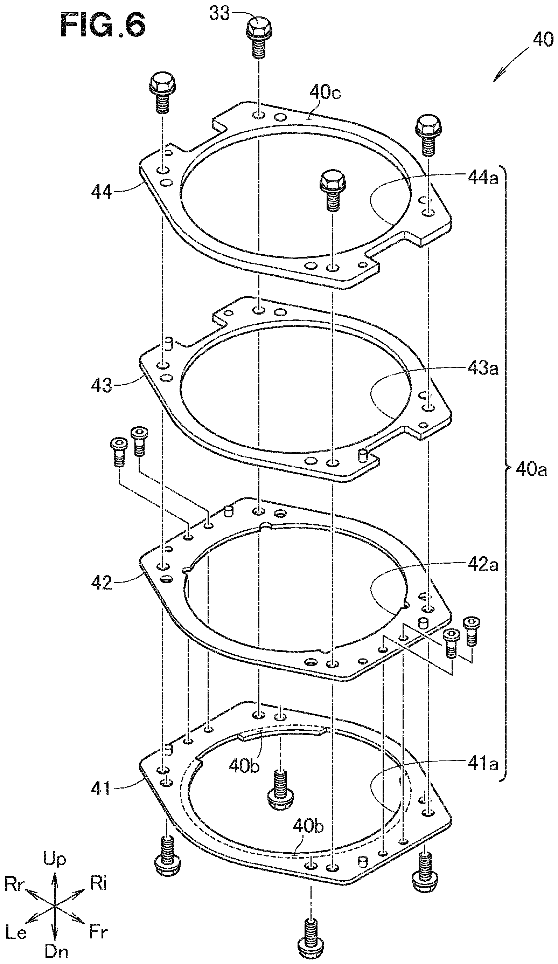

Referring to Fig. 3 and Fig. 6, the support unit 40 has a generally circular opening 40a in its center area. The support unit 40 is constituted by a stack of four plate members (metallic plates) 41-44. The four plate members 41-44 are referred to as the first plate member 41, the second plate member 42, the third plate member 43, and the fourth plate member 44 from the bottom of the stack. Each of the first plate member 41 to the fourth plate member 44 is prepared by press forming or molding.

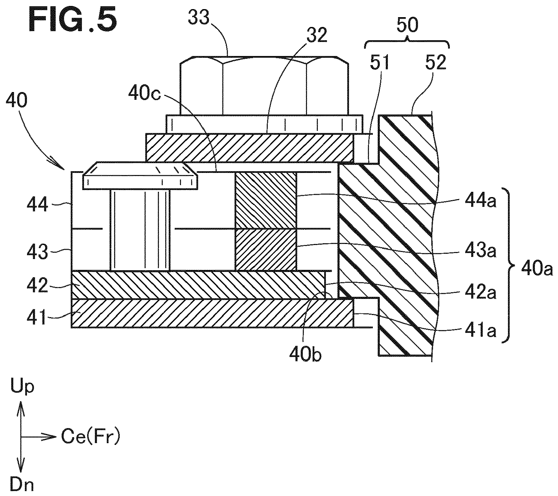

Referring to Fig. 5, a first opening 41a is formed in a center area of the first plate member 41, and serves as part of the opening 40a of the support unit 40. The first opening 41a is smaller than a second opening 42a, a third opening 43a and a fourth opening 44a formed in the center areas of the other plate members 42, 43 and 44, which also serve as parts of the opening 40a of the support unit 40. Thus, the first plate member 41 more protrudes toward the center than the second plate member 42 to the fourth plate member 44. The protruding portion may be referred to as protruding portions 40b of the support unit that extend toward the center of the opening 40a of the support unit 40 from certain portions of the opening 40a and can support the first workpiece 50 thereon.

Referring to Fig. 6, the protruding portions 40b of the support unit 40 are formed intermittently on the first plate member 41.

### The Clamping Plate 32

Referring to Fig. 2 and Fig. 3, the clamping plate 32 is a metallic plate that has a generally donut shape. The clamping plate 32 has contacting portions 32a along its outer periphery such that each of the contacting portions 32a can contact the shaft of the corresponding tightening member 33. The contacting portions 32a extend generally tangentially from the outer periphery of the clamping plate 32, with the angle between each of the contacting portions 32a and the outer periphery being the same.

### The First Workpiece 50

Referring to Fig. 3, the first workpiece 50 is a disk-like plaster. It is possible to obtain a plurality of artificial teeth T1 (prosthesis) from the first workpiece 50 by grinding.

The first workpiece 50 has a first large-diameter portion 51, which is shaped like a disc and defines the largest outer diameter portion of the first workpiece. The first workpiece 50 also has first small-diameter portions 52, each of which is shaped like a disc with an outer diameter smaller than the first large-diameter portion 51. The first small-diameter portions 52 are present on and below the first large-diameter portion 51, and the first small-diameter portions 52 are integrated with the first large-diameter portion 51.

### Method of Holding the First Workpiece 50

In order to fix the first workpiece 50 onto the workpiece clamping device 30, the first workpiece 50 is firstly brought to the opening 40a of the support unit 40. Referring also to Fig. 5, the outer diameter of the first large-diameter portion 51 is greater than the inner diameter of the protruding portions 40b of the support unit 40, and the outer diameter of the first small-diameter portion 52 is smaller than the inner diameter of the protruding portions 40b of the support unit. Thus, it is possible to place the first large-diameter portion 51 on the protruding portions 40b of the support unit 40.

Subsequently, the clamping plate 32 is placed over the support unit 40. The inner diameter of the clamping plate 32 is greater than the outer diameter of each of the first small-diameter portions 52, and smaller than the outer diameter of the first large-diameter portion 51. Thus, it is possible to place the clamping plate 32 on the first large-diameter portion 51.

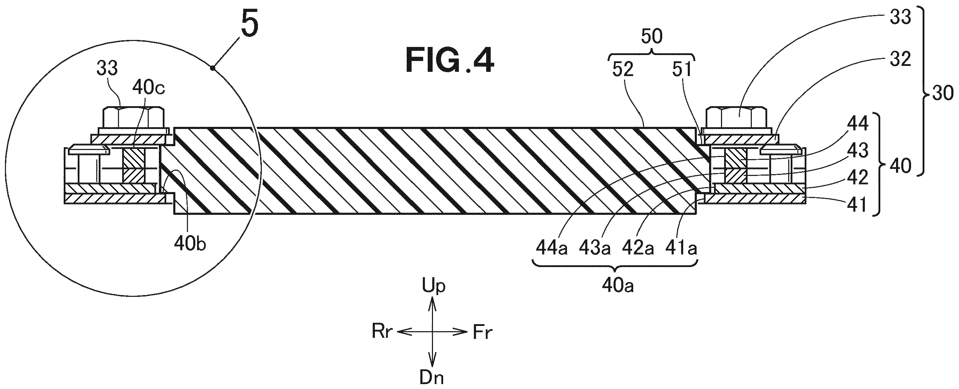

Referring to Fig. 4, the first workpiece 50 is clamped by the workpiece clamping device 30 upon tightening the tightening members 33.

Referring to Fig. 1, the workpiece clamping device 30 that has clamped the first workpiece 50 is fixed on the rotating device 13. The first workpiece 50 is ground by the drill 15 while causing the first workpiece 50 to rotate, thereby manufacturing the artificial teeth.

The workpiece clamping device 30 can also clamp different sizes of workpieces other than the first workpiece 50. This will be described below.

### The Second Workpiece 60

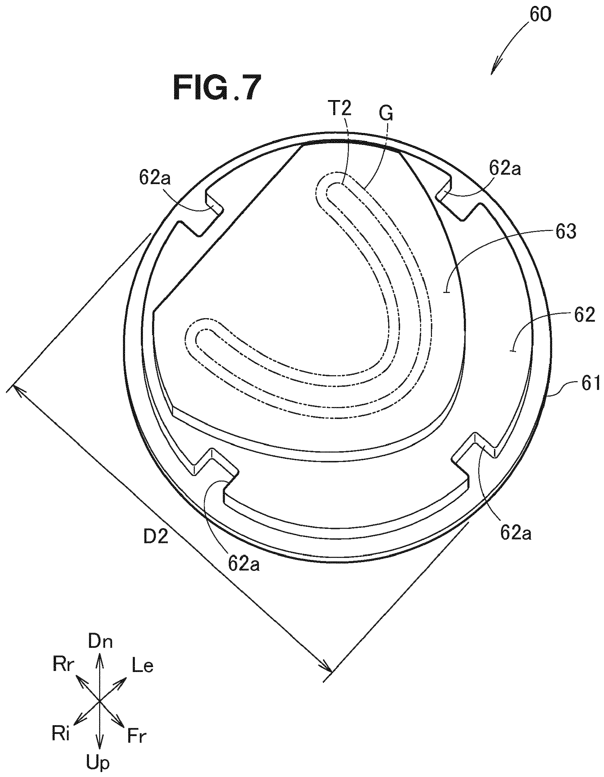

Referring to Fig. 7, a second workpiece 60 is made from resin, and ground to false teeth (prosthesis) by the milling machine 10 (see Fig. 1). More specifically, the second workpiece 60 is a resin workpiece that has a set of standing artificial teeth T2. The periphery of the artificial teeth T2 is ground in conformity with the gums of a patient to obtain a dental plate (denture base) G.

The second workpiece 60 has a second large-diameter portion 61, which is shaped like a dis and defines the largest outer diameter of the second workpiece. The second workpiece 60 also has a positioning portion 62 integral with the second large-diameter portion 61 and used for positioning, and a main portion 63 integral with the positioning portion 61. The prosthesis is obtained by grinding the main portion 63.

Referring also to Fig. 4, the outer diameter of the second large-diameter portion 61 is greater than the outer diameter of the first large-diameter portion 51.

The positioning portion 62 has four cut-outs or depressions 62a for positioning, each of which has a depth toward the center.

### The Spacer 70

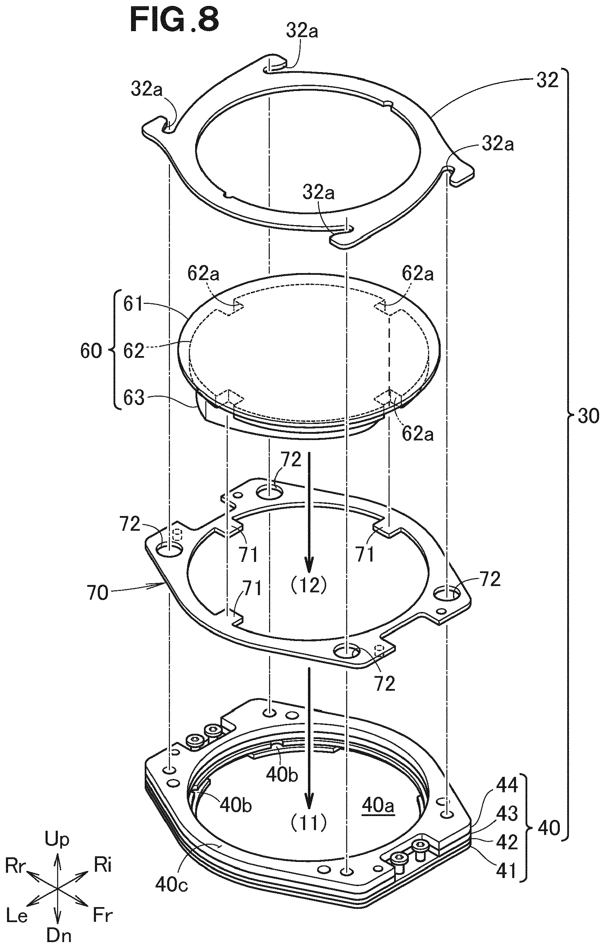

Referring to Fig. 8, the second workpiece 60 is fixed to the workpiece clamping device 30 with a spacer 70. The spacer 70 is a component made from a metallic plate. The space 70 has projecting portions 71 for positioning, which are fitted in (or are engaged with) the depressions 62a. The space 70 also has through holes 72 such that the shaft portions of the tightening members 33 penetrate through the through holes 72. Each of the through holes 72 has a larger diameter than the outer diameter of the shaft portion of the tightening member 33.

It should be noted that the space 70 may not be used if the length of the second workpiece 60 in the axial direction is small or if the fourth plate member 44 has projecting portions for positioning.

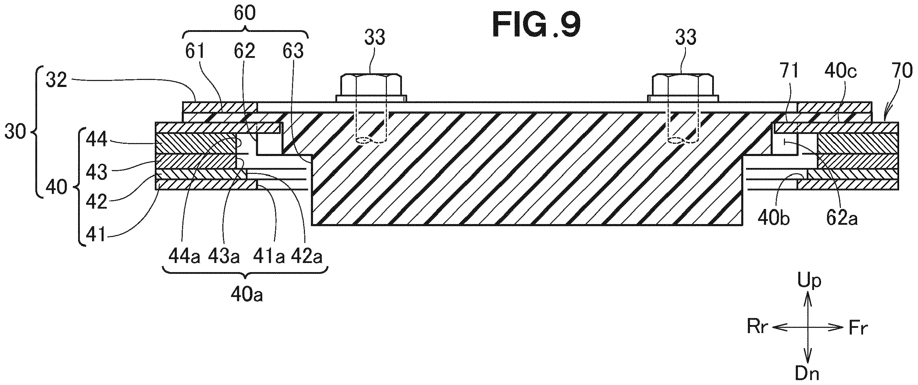

Referring to Fig. 9, the outer diameter of the second large-diameter portion 61 is greater than the inner diameter of each of the first opening 41a to the fourth opening 44a (greater than the inner diameter of the opening 40a of the support unit 40). The second large-diameter portion 61 is placed on the upper surface 40c of the support unit 40 via the spacer 70.

Referring also to Fig. 8, when the second workpiece 60 is fixed onto the workpiece clamping device 30, the space 70 is placed on the top of the support unit 40, and then the second workpiece 60 is placed on the support unit 40. After placing the second workpiece 60, the clamping plate 32 is placed over the second workpiece. Upon tightening the tightening members 33 (see Fig. 2), the second workpiece 60 is clamped by the workpiece clamping device 30.

The above-described embodiment of the present invention has the following advantages.

The support unit 40 can support the second large-diameter portion 61 on its upper face 40c, and support the first large-diameter portion 51 on its protruding portions 40b that extend toward the center of the opening 40a of the support unit 40. Thus, the two kinds of workpieces 50 and 60, having different sizes, can be placed on the upper face 40c and the protruding portions 40b of the support unit 40, respectively. It is not necessary to prepare different support units 40 and clamping plates 32 depending upon the kinds of the workpieces 50 and 60. Rather, the single workpiece clamping device 30 can hold the different sizes of workpieces 50 and 60.

The support unit 40 is formed of a stack of plate members 41-44, and the plate member 41 among the plate members 41-44 has the protruding portions 40b. It is possible to manufacture the support unit 40 in a short time because the support unit 40 is made by stacking the plate members 41-44 having different shapes.

It is preferred that each of the plate members 41-44 is prepared by press forming or molding. The plate members 41-44, which are obtained by the press forming process, are piled up so that the support 40 is easy to manufacture, as compared to when grinding a cast product to obtain the support unit.

It should be noted that although the first workpiece is processed to a plurality of artificial teeth and the second workpiece is processed to a combination of the artificial teeth and the dental plate (the artificial teeth are integral with the dental plate) in the foregoing description, the first and second workpieces are not limited to such teeth as long as the first and second workpieces have different sizes from each other.

In other words, the present invention is not limited to the above-described embodiments as long as the advantages of the present invention can be obtained.

### INDUSTRIAL APPLICABILITY

The workpiece clamping device of the present invention is suitable for fixing a workpiece that will be processed to a dental prosthesis.

### REFERENCE NUMERALS

30 Workpiece clamping device
32 Clamping plate
40 Support unit
40a Opening of the support unit
40b Protruding portion of the support unit
40c Upper surface
41 First plate member
42 Second plate member
43 Third plate member
44 Fourth plate member
50 First workpiece
51 First large-diameter portion
60 Second workpiece
61 Second large-diameter portion

## Claims

1. A workpiece clamping device configured to be able to support a first workpiece and a second workpiece, the first workpiece having a first large-diameter portion that is generally shaped like a disc, the first large-diameter portion defining a largest outer diameter portion of the first workpiece, the first workpiece being ground to a first prosthesis, the second workpiece having a second large-diameter portion whose outer diameter is greater than the first large-diameter portion, the second large-diameter portion defining a largest outer diameter portion of the second workpiece, the second workpiece being ground to a second prosthesis, which is different from the first prosthesis, the workpiece clamping device comprising:
a support unit configured to support the second large-diameter portion on an upper face of the support unit, the support unit having an opening through which the first workpiece and the second workpiece can move, the support unit also having protruding portions extending toward a center of the opening of the support unit from certain portions of the opening of the support unit such that the first large-diameter portion can be placed on the protruding portions; and
a clamping plate configured to be placed over the first or second workpiece supported by the support unit such that the clamping plate and the support unit, in combination, clamp the first or second workpiece placed on the support unit.

2. The workpiece clamping device according to claim 1, wherein the support unit is formed of a stack of plurality of plate members, and one of the plurality of plate members has the protruding portions.
